# EUROPEAN PATENT APPLICATION

(11) **EP 4 718 618 A1**
(43) Date of publication of application: **01.04.2026**
(21) Application number: 24913378.6
(22) Date of filing: 24.12.2024
(51) Int. Cl.: H01M 50/50, H01B 7/04, H01B 7/08, H01M 50/502, H01M 50/519

(54) **FLEXIBLE FLAT CABLE ASSEMBLY DEVICE AND ASSEMBLY METHOD THEREOF**

(30) Priority: 26.12.2023 KR 20230191645; 30.01.2024 KR 20240014426; 29.04.2024 KR 20240057000
(71) Applicant: LG Energy Solution, Ltd., Seoul 07335 (KR)
(72) Inventor: HAM, Jiwon, Daejeon 34122 (KR); LEE, Jaechul, Daejeon 34122 (KR); LEE, Jungwoo, Daejeon 34122 (KR)
(74) Representative: Plasseraud IP
(86) International application number: PCT/KR2024/021071
(87) International publication number: WO 2025/143771

(57) **Abstract**

A flexible flat cable assembly device for manufacturing a battery cell unit according to various embodiments comprises: a transfer member; and a plurality of gripping members protruding from the transfer member, wherein the plurality of gripping members may include a first gripping member for gripping one end of a flexible flat cable and a second gripping member for gripping the other end of the flexible flat cable. Various other embodiments are possible.

## Description

### Technical Field

The present disclosure relates to an assembly apparatus for assembling a flexible flat cable used to manufacture a battery cell unit and a method of assembling the same.

### Background Art

Secondary batteries may be charged and discharged unlike primary batteries, and thus, may be applied to various fields such as digital cameras, mobile phones, laptops, hybrid cars, and electric vehicles. The secondary batteries include a nickelcadmium battery, a nickel-metal hydride battery, a nickel-hydrogen battery, and a lithium ion battery, which is widely used recently.

As electric vehicles or energy storage systems demand large-capacity and highoutput power, large-capacity battery devices are widely used, such as a battery module and a battery pack with multiple battery cells accommodated within a housing. In particular, recently, to maximize the energy density of battery devices, a technology is emerging, regarding a cell to pack (CTP) structure to omit an existing battery module case and directly accommodate a battery cell unit (or a battery cell assembly) formed by bundling battery cells into a predetermined unit in a battery pack housing.

Meanwhile, when multiple battery cells are bundled and accommodated in a single battery pack housing, several battery cells need to be electrically connected. As above, when multiple battery cells are used through series or parallel connection, a battery cell unit (or a battery pack provided with one or more battery cell units or battery modules) may include components such as a sensing member for measuring voltage and temperature of a plurality of battery cells, a battery management system (BMS) that may perform voltage balancing and temperature control functions, a cable (for example, a flexible flat cable (FFC)) for transmitting voltage and temperature information from the sensing member to the BMS, and a connector.

Generally, a flexible printed circuit (FPC) is provided between busbar frames located at a front end and a rear end of a battery cell unit (or a battery module) so that two busbar frames are connected through the FPC, and a manner of placing a cover plate at an upper end of the FPC is applied to prevent damage to the FPC.

However, there is a recent tendency to apply a manner of removing a cover plate that protects and supports an FPC and connecting two busbar frames using an FFC requiring no protective member such as the cover plate, instead of the FPC.

### Detailed Description of the Invention

### Technical Goals

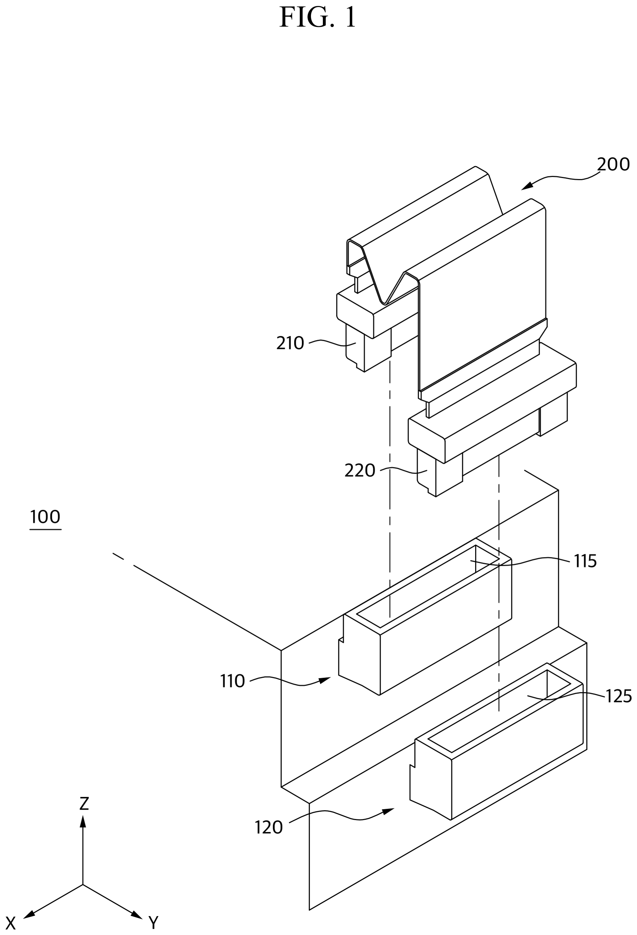

A battery cell unit (or a battery module) according to various aspects may include a flexible flat cable for electrically connecting predetermined different elements (for example, components such as an integrated circuit) provided in the battery cell unit, based on various design changes for maximizing energy density, in addition to a flexible flat cable directly connecting two busbar frames located at a front end and a rear end of the battery cell unit individually. For example, as illustrated in FIG. 1, a flexible flat cable electrically connecting two components provided at one side (for example, the front end of the battery cell unit) facing a first direction in the battery cell unit may be additionally provided.

Various aspects of the present disclosure are intended to provide an apparatus and a method for manufacturing a battery cell unit by automatically assembling a flexible flat cable into a connector even when a peripheral portion of the battery cell unit has a small space.

### Technical solutions

According to various aspects of the present disclosure, provided is an assembly apparatus of a flexible flat cable for manufacturing a battery cell unit, the assembly apparatus including a transfer member and a plurality of gripping members formed to protrude from the transfer member, and the plurality of gripping members may include a first gripping member configured to grip one end of the flexible flat cable and a second gripping member configured to grip another end of the flexible flat cable.

According to an aspect, the flexible flat cable may be configured to electrically connect two different components disposed at one side of the battery cell unit facing a first direction.

According to an aspect, a relative position of the first gripping member and the second gripping member may be set to be adjusted in advance based on location information on two components connected to the flexible flat cable.

According to an aspect, the transfer member may be configured to be driven to move closer to the two components simultaneously with a state in which the relative position of the first gripping member and the second gripping member is maintained and to assemble the one end and the other end of the flexible flat cable into the two components individually.

According to an aspect, each of the first gripping member and the second gripping member may include a gripper including a pair of finger parts that is operable to move closer or farther with respect to the one end or the other end of the flexible flat cable.

According to an aspect, each of the first gripping member and the second gripping member may be formed to protrude within an inner space formed at an end portion of the transfer member.

According to an aspect, the pair of finger parts may be formed in an L-shape.

According to an aspect, the gripper may include a pneumatic gripper or a vacuum suction gripper.

According to an aspect, the transfer member may include a robot arm.

According to an aspect, the battery cell unit manufactured by the assembly apparatus according to various aspects of the present disclosure may include a battery cell stack in which one or more battery cells are stacked, a first busbar frame coupled to the battery cell stack and disposed at a first side of the battery cell unit facing a first direction, a second busbar frame coupled to the battery cell stack and disposed at a second side of the battery cell unit facing a second direction that is an opposite direction of the first direction, and a lead cover frame coupled to the first busbar frame to at least partially cover the first busbar frame at the first side of the battery cell unit, and the transfer member and the plurality of gripping members may operate so that the one end of the flexible flat cable is connected to a first integrated circuit mounted on the first busbar frame and the other end of the flexible flat cable is connected to a second integrated circuit mounted on the lead cover frame.

According to an aspect, the second integrated circuit may include a cell management controller (CMC).

According to an aspect, a first point at which the first integrated circuit is connected to the one end of the flexible flat cable and a second point at which the second integrated circuit is connected to the other end of the flexible flat cable may have different distances from a central portion of the battery cell unit in the first direction and different heights in a vertical direction.

According to an aspect, the lead cover frame may include a slit at locations corresponding to the first point and the second point.

According to an aspect, based on the flexible flat cable connected by the assembly apparatus, information related to a potential detected by the first integrated circuit may be transferred to the second integrated circuit through the flexible flat cable.

### Effects of the Invention

According to various aspects, it is possible to provide an apparatus and a method for automatically assembling a flexible flat cable when manufacturing a battery cell unit.

In particular, it is possible to provide an apparatus and a method for effectively assembling a cable into a connector even when a peripheral portion of the battery cell unit has a small space. In addition, it is possible to decrease a manufacturing time of a battery cell unit by rapidly and easily assembling a flexible flat cable and reduce a manufacturing cost by omitting a redundant process.

### Brief Description of Drawings

FIG. 1 is a schematic exploded perspective view of a battery cell unit according to an aspect of the present disclosure.
FIG. 2 is a schematic perspective view of a battery cell unit according to an aspect of the present disclosure.
FIGS. 3A and 3B are a schematic top view and a schematic perspective view, respectively, showing a flexible flat cable assembly apparatus used for manufacturing a battery cell unit according to an aspect of the present disclosure.
FIG. 3C is a perspective view schematically illustrating a state of a flexible flat cable assembly apparatus gripping a flexible flat cable according to an aspect of the present disclosure.
FIG. 4 is a schematic flowchart regarding a method of assembling a flexible flat cable used for manufacturing a battery cell unit according to an aspect of the present disclosure.
FIG. 5 is a perspective view schematically illustrating a flexible flat cable and a busbar frame included in a battery cell unit according to an aspect of the present disclosure.
FIG. 6 is a diagram for illustrating a method of assembling a flexible flat cable used for manufacturing a battery cell unit according to an aspect of the present disclosure.
FIG. 7 is an exploded perspective view of a battery cell unit according to an aspect of the present disclosure.
FIG. 8 is a perspective view of a battery cell unit of FIG. 7.
FIG. 9 is a partial exploded perspective view of a battery cell unit of FIG. 7.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own disclosure in the best way. Therefore, the aspects described in the specification and the configurations illustrated in the drawings are no more than the most preferred aspects of the present disclosure and do not fully cover the technical idea of the present disclosure. Accordingly, it should be understood that there may be various alternatives, equivalents, and modification examples when this application is filed.

Identical reference numerals or signs indicated in each drawing appended to the specification may refer to components or elements performing substantially identical functions. For convenience of description and understanding, the same reference numeral or sign may be used for description in different aspects. In other words, even though elements with the same reference numeral are illustrated in a plurality of drawings, not all of the plurality of drawings may represent a single aspect.

In the following description, a singular expression includes a plural expression unless apparently otherwise defined by context. It should be understood that terms such as "comprise or include" and "configure" are intended to indicate the presence of a feature, a number, a step, an operation, an element, a component, or a combination thereof described in the specification and not intended to exclude the possibility of the presence or addition of one or more other features, numbers, steps, operations, elements, components, or combinations thereof in advance.

In addition, expressions such as upper side, upper portion, above, lower side, lower portion, below, side surface, front surface, and rear surface are represented hereinafter with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, a using order, an arrangement sequence, or the like of an element combined with an ordinal number is not to be construed as limited by the ordinal number. In some cases, each ordinal number may also be used to replace each other.

Hereinafter, aspects of the present disclosure are described with reference to the accompanying drawings. However, the present disclosure is not limited to the aspects described. For example, a person of ordinary skill in the art who understands the idea of the present disclosure may provide other aspects included within the scope of the idea of the present disclosure through the addition, change, or deletion of an element, which are also included within the scope of the present disclosure though. The shapes, sizes, and the like of elements may be exaggerated in the drawings for clearer description.

FIG. 1 is a schematic exploded perspective view of a battery cell unit according to an aspect of the present disclosure.

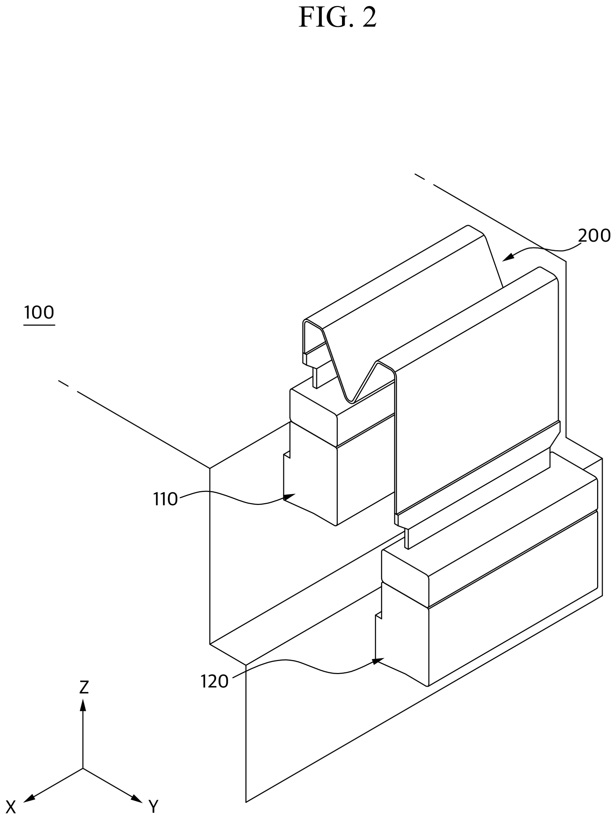

FIG. 2 is a schematic perspective view of a battery cell unit according to an aspect of the present disclosure.

For example, FIG. 1 may correspond to a diagram illustrating a state before coupling a flexible flat cable 200 according to an aspect to each component 110 and 120, and FIG. 2 may correspond to a diagram illustrating a state after coupling the flexible flat cable 200 of FIG. 1 to each component 110 and 120.

Referring to FIGS. 1 and 2, a battery cell unit 100 according to various aspects may be configured so that two components 110 and 120 are electrically connected through the flexible flat cable 200.

In particular, as illustrated in FIGS. 1 and 2, both components 110 and 120 may be disposed at one side of the battery cell unit 100 to face an identical direction (for example, a front surface of the battery cell unit 100 facing a +Y-axis direction of FIGS. 1 and 2), and each of connectors 115 and 125 coupled to one end of each component 110 and 120 may also be disposed to face an identical direction (for example, a +Z-axis direction (for example, an upward direction of the battery cell unit 100) of FIGS. 1 and 2). Meanwhile, the flexible flat cable 200 may be configured so that both end portions 210 and 220 thereof are connected to or inserted into the connectors 115 and 125 of the components 110 and 120, respectively.

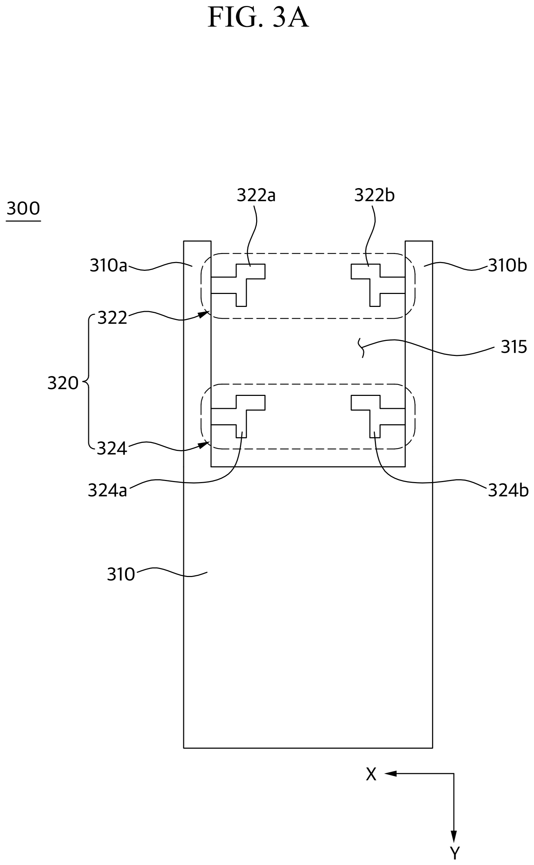

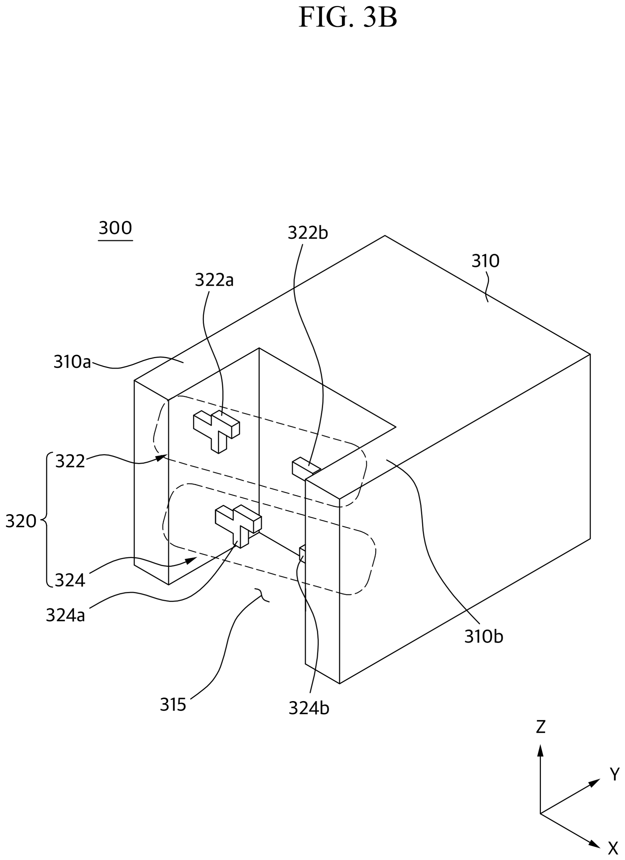

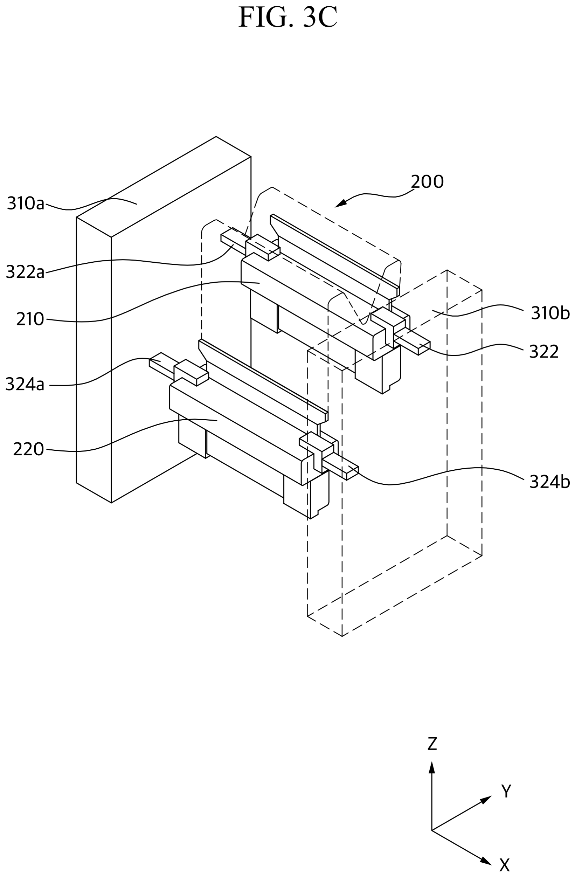

FIGS. 3A and 3B are a schematic top view and a schematic perspective view, respectively, showing a flexible flat cable assembly apparatus 300 used for manufacturing the battery cell unit 100 according to an aspect of the present disclosure. For example, FIGS. 3A and 3B are a top view and a perspective view, respectively, schematically illustrating a portion of a transfer member 310 included in the apparatus 300 for assembling the flexible flat cable 200. FIG. 3C is a perspective view schematically illustrating a state of the flexible flat cable assembly apparatus 300 gripping the flexible flat cable 200 according to an aspect of the present disclosure.

Referring to FIGS. 3A to 3C, the assembly apparatus 300 according to various aspects may include one or more gripping members 320 with a shape protruding from one transfer member 310.

For example, the assembly apparatus 300 may include a first gripping member 322 formed to protrude at a first height and a second gripping member 324 formed to protrude at a second height. Each of the gripping members 322 and 324 may be configured to be movable in each of an up and down direction (for example, +Z direction and -Z direction), a left and right direction (for example, +X direction and -X direction), and a front and rear direction (for example, +Y direction and -Y direction) individually (in other words, independently of each other).

For example, the first gripping member 322 and the second gripping member 324 may operate to grip each connector formed at both end portions 210 and 220 of the flexible flat cable 200 to move the flexible flat cable 200 to an assembly area where the battery cell unit 100 is located, subsequently, so that the connector of each end portion 210 and 220 of the flexible flat cable 200 is inserted into each component 110 and 120 (for example, the connectors 115 and 125 formed in each component 110 and 120). For example, each connector formed at both end portions 210 and 220 of the flexible flat cable 200 may be a female connector, and each connector 115 and 125 formed in each of the components 110 and 120 may be a male connector. However, aspects of the present disclosure are not limited to these examples, and conversely, a male connector may be formed at each end portion 210 and 220 of the flexible flat cable 200, and female connectors 115 and 125 may be formed at one side of each component.

Meanwhile, in an aspect of the present disclosure, the two components 110 and 120 provided in the battery cell unit 100 may be formed in a stepped shape to have a predetermined step as illustrated in FIGS. 1 and 2. For example, a second component 120 may be disposed at a further protruding location in the +Y-axis direction than a first component 110. In addition, for example, the first component 110 may be disposed at a higher location in the +Z-axis direction than the second component 120.

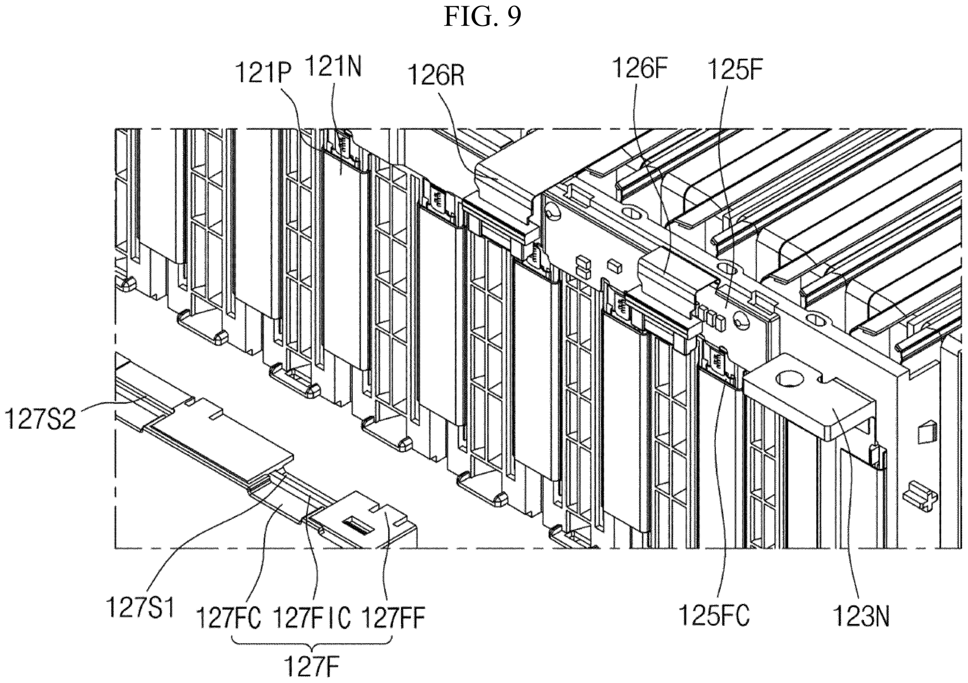

As above, the first component 110 and the second component 120 may be disposed at different locations with respect to a Y-axis direction and/or a Z-axis direction. In this case, the first component 110 and the second component 120 may be formed to have a predetermined step in a single member as illustrated in FIG. 2, but in contrast, a structure where a predetermined step is formed by mechanically mounting an additional frame equipped with the second component 120 on one surface where the first component 110 is mounted may also be applied as described below with reference to FIG. 9.

According to an aspect, in the assembly apparatus 300, positions of two gripping members 322 and 324 may be adjusted in advance based on a relative position of portions (in other words, each connector 115 and 125 of the two components 110 and 120) connected to the flexible flat cable 200 in the two components 110 and 120, so that the two components 110 and 120 provided in the battery cell unit 100 and both end portions 210 and 220 of the flexible flat cable 200 may be simultaneously assembled and interconnected. In this case, the assembly apparatus 300 may be driven to move closer to each of the components 110 and 120 based on an operation of the transfer member 310 simultaneously with a state in which a relative position of the two gripping members 322 and 324 is adjusted in advance and maintained to assemble one end and another end of the flexible flat cable 200 into each of the components 110 and 120. Through this, the assembly apparatus 300 may easily and rapidly assemble the flexible flat cable 200 into the connectors 115 and 125 of each component 110 and 120 of the battery cell unit without involvement with other elements even when a peripheral portion of the battery cell unit 100 has a small space.

However, aspects are not limited to these examples, and in a state where a relative position of the gripping members 322 and 324 does not correspond to a relative position of the connectors 115 and 125 of each component 110 and 120, a predetermined gripping member (for example, the first gripping member 322) may operate to assemble one end portion 210 of the flexible flat cable 200 first into one component 110 and then the remaining gripping member 324 may operate to assemble another end portion 220 of the flexible flat cable 200 into another component 120.

Meanwhile, each gripping member 320 (for example, the first gripping member 322 and the second gripping member 324) may be formed to protrude within an inner space 315 provided at an end portion of the transfer member 310. For example, the inner space 315 may correspond to a space formed by a first extension part 310a and a second extension part 310b of the transfer member 310 and may correspond to a space in which the gripping members 320 substantially perform an operation of gripping components or releasing a grip.

Each gripping member 320 may be a gripper including a pair of finger parts 322a and 322b or 324a and 324b. Further, in an aspect, the transfer member 310 may include a robot arm.

The pair of finger parts 322a and 322b or 324a and 324b provided in each gripping member 320 may be provided in a direction facing each other and controlled to move closer or farther (and/or to rotate) with respect to one end or another end of the flexible flat cable 200. For example, the pair of finger parts 322a and 322b or 324a and 324b included within one gripping member 320 may grip an end portion of the cable 200 when moving closer to each other, and may release a grip on an end portion of the cable 200 when moving farther from each other.

In an aspect of the present disclosure, each of the finger parts may be formed in an L-shape (or a right-angle shape). For example, as illustrated in FIG. 3C, each of the finger parts may have a shape that may be interlocked with and coupled to an outer portion of a connector provided in each end portion 210 and 220 of the cable 200 when gripping the cable 200. Due to this shape, the finger part may perform a stable grip by pressing both sides (for example, in a +X-axis direction and a -X-axis direction) of each end portion 210 and 220 of the cable 200 when gripping the cable 200, and may effectively insert each end portion 210 and 220 of the cable 200 into the connectors 115 and 125 of the components 110 and 120 by pressing an upper portion (for example, in the +Z-axis direction and a -Z-axis direction) of each end portion 210 and 220 of the cable 200 when assembling the cable 200 into each component 110 and 120.

Meanwhile, according to various aspects, the gripping member 320 provided in the assembly apparatus 300 may include at least one of a pneumatic gripper or a vacuum suction gripper. For example, the pneumatic gripper may operate each finger part using compressed air and a piston. The vacuum suction gripper may grip an end portion of the cable 200 by generating a difference between atmospheric pressure and vacuum using a pump.

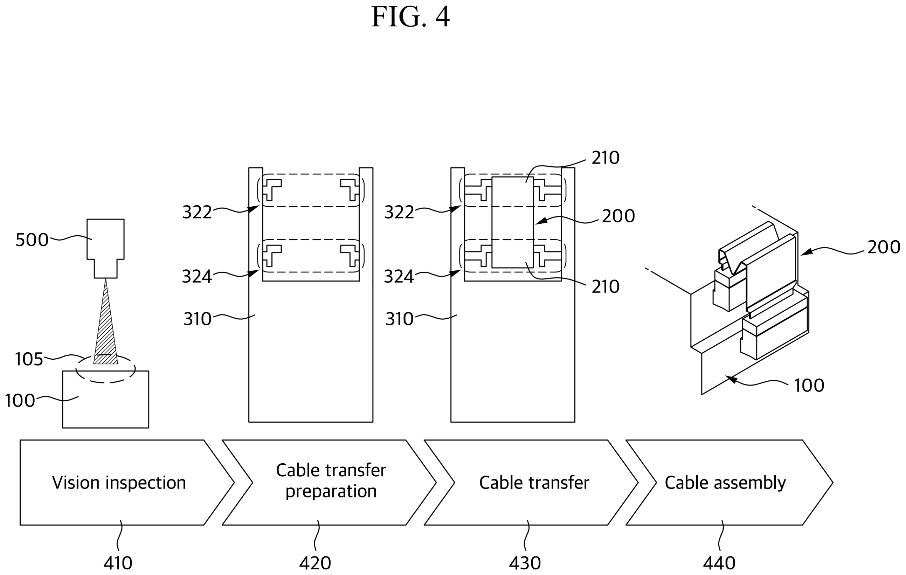

FIG. 4 is a schematic flowchart regarding a method of assembling the flexible flat cable 200 used for manufacturing the battery cell unit 100 according to an aspect of the present disclosure.

Referring to FIGS. 1 to 4, the method of assembling the flexible flat cable 200 according to various aspects may include performing vision inspection to obtain location information on an assembly area 105 in which the cable 200 is assembled in the battery cell unit 100 in operation 410.

For example, in operation 410, the assembly apparatus 300 may automatically sense the location information on the assembly area 105 using a vision sensor or a camera 500. For example, the location information may be obtained in the form of 3-axis coordinate information.

For example, the location information may include coordinate information on each end portion of two components 110 and 120 disposed to face an identical direction (for example, a first direction and the +Y-axis direction of FIG. 1) in the battery cell unit 100, in other words, each of the connector 115 corresponding to the first component 110 and the connector 125 corresponding to the second component 120. The location information may include not only information on absolute positions of the connectors 115 and 125 of each of the two components 110 and 120 but also information on a relative position between the two connectors 115 and 125.

Meanwhile, although not illustrated in FIG. 4, the method of assembling the flexible flat cable 200 according to various aspects of the present disclosure may further include automatically inspecting whether the cable 200 is accurately assembled into the battery cell unit 100 using the vision sensor or the camera 500 as an operation subsequent to operation 440 to be described below. For example, in various aspects, the assembly apparatus 300 may be set to output related information (for example, information such as an assembly error notification) to a manager based on a result of automatic inspection or perform a reassembly operation of the cable 200 by operating the assembly apparatus 300 again.

The assembly apparatus 300 may determine a transfer target point of the transfer member 310 based on the location information on the assembly area 105 of the battery cell unit 100 obtained through the vision inspection.

Next, in operation 420, as a preparation operation for transferring the flexible flat cable 200, the assembly apparatus 300 may dispose each of the gripping members 322 and 324 (for example, a plurality of grippers) formed to protrude from a single transfer member 310 (for example, a robot arm) in an open state and move the transfer member 310 to a location at which the flexible flat cable 200 may be gripped.

Next, in operation 430, as an operation of transferring the flexible flat cable 200, the assembly apparatus 300 may position each of the gripping members 322 and 324 at each end portion 210 and 220 of the flexible flat cable 200 and then dispose the gripping members 320 in a closed state to grip the flexible flat cable 200 and may control the transfer member 310 to transfer the flexible flat cable 200 with gripped to the assembly area 105.

In this case, the assembly apparatus 300 may adjust a relative position of the two gripping members 322 and 324 in advance based on the location information on the two components 110 and 120 (in other words, each connector 115 and 125 of the two components 110 and 120) of the battery cell unit 100, which is obtained through operation 410 and previously stored.

Meanwhile, in various aspects, each of the gripping members 322 and 324 may include the pair of finger parts 322a and 322b or 324a and 324b operable to move closer or farther with respect to each other.

For example, as at least one pair of finger parts moves farther from each other to be in an open state, the gripping member 320 may not allow the pair of finger parts to grip a part (for example, the flexible flat cable 200). In addition, as at least one pair of finger parts moves closer to each other to be in a closed state, the gripping member 320 may allow a part (for example, the flexible flat cable 200) to be inserted in a space between the pair of finger parts and gripped.

Next, in operation 440, based on an operation of the transfer member 310, the assembly apparatus 300 may be driven to transfer the flexible flat cable 200 to the assembly area 105 where the battery cell unit 100 is located and then lower the two gripping members 322 and 324 simultaneously, so that each end portion 210 and 220 of the cable 200 is assembled at once into the connector 115 and 125 of each corresponding component 110 and 120.

In another aspect, the assembly apparatus 300 may be configured to perform sequential assembly in a manner of first inserting A connector (for example, a female connector) of a first end portion 210 of the flexible flat cable 200 into the connector 115 (for example, a male connector) of the first component 110 corresponding thereto using the first gripping member 322 and inserting, as a subsequent operation, B connector (for example, a female connector) of a second end portion 220 of the flexible flat cable 200 into the connector 125 (for example, a male connector) of the second component 120 corresponding thereto using the second gripping member 324.

In this case, each end portion 210 and 220 of the cable 200 may be located more accurately at the assembly area 105 of each of the components 110 and 120 and thus may be finely assembled.

Meanwhile, in various aspects of the present disclosure, the assembly apparatus 300, by applying a manner in which the first gripping member 322 and the second gripping member 324 simultaneously assemble both end portions 210 and 220 of the flexible flat cable 200 into each component 110 and 120, may perform assembly as the two gripping members 322 and 324 simultaneously and integrally descend toward the components 110 and 120 after the positions thereof are adjusted in advance to correspond to a relative position of the two components 110 and 120 (for example, the connectors 115 and 125 mounted in the two components 110 and 120).

Accordingly, in an assembly operation of operation 440, assembly may be conducted after the two gripping members 322 and 324 moves closer to each of the components 110 and 120 of the battery cell unit 100 by the operation of the single transfer member 310, without adjusting a relative position in an up and down direction (for example, +Z direction and -Z direction), a left and right direction (for example, +X direction and -X direction), and a front and rear direction (for example, +Y direction and -Y direction) with respect to each other.

However, even in this case, the assembly apparatus 300 according to an aspect may be provided with functions to modify the relative position of the first gripping member 322 and the second gripping member 324 or control movements in all of the up and down direction (for example, +Z direction and -Z direction), the left and right direction (for example, +X direction and -X direction), and the front and rear direction (for example, +Y direction and -Y direction) in order to control other operations for maintenance.

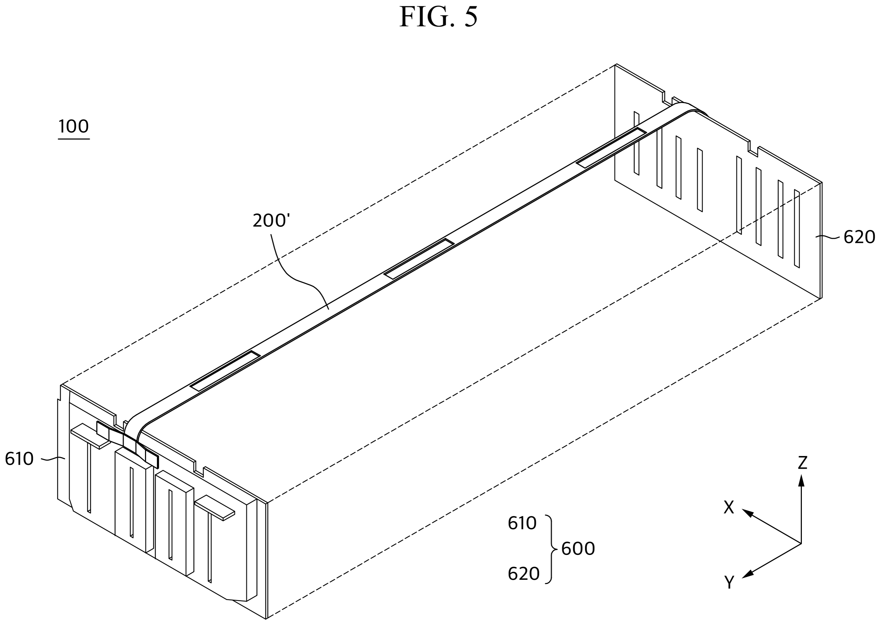

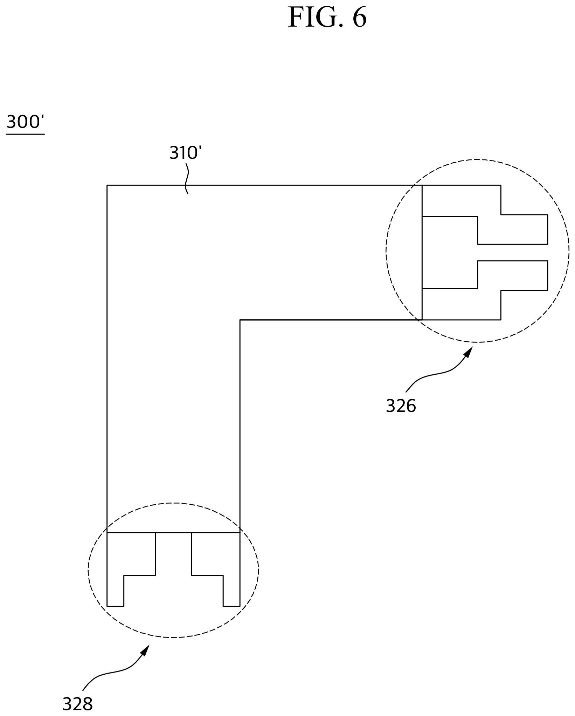

FIG. 5 is a perspective view schematically illustrating a busbar frame 600 included in the battery cell unit 100 and a flexible flat cable 200' assembled into the busbar frame 600 according to another aspect of the present disclosure. FIG. 6 is a schematic diagram for illustrating a method of assembling the flexible flat cable 200' used for manufacturing the battery cell unit 100 according to another aspect of the present disclosure.

Referring to FIGS. 5 and 6, the battery cell unit 100 according to various aspects may include a first busbar frame 610 disposed at a first side (for example, on a first surface (for example, a front surface) facing the +Y-axis direction) of the battery cell unit 100 and a second busbar frame 620 disposed at a second side (for example, a second surface (for example, a rear surface) facing the -Y-axis direction) facing a different direction from the first side and may include the flexible flat cable 200' for an electrical signal connection between these busbar frames 600.

For example, the busbar frame 600 may include a busbar and a cell connection board and may be formed to cover both side surfaces of the battery cell unit 100 so as to electrically connect electrode leads of a plurality of battery cells.

Meanwhile, as illustrated in FIG. 6, an assembly apparatus 300' according to an aspect may include a transfer member 310' (for example, a robot arm) and one or more gripping members 326 and 328 formed to protrude from the transfer member 310'. For example, each of the gripping members 326 and 328 may have a structure protruding from the transfer member 310' toward different directions (for example, directions perpendicular to each other).

As an example, the assembly apparatus 300' may grip one area (for example, a central area other than both end portions) of the flexible flat cable 200' using a third gripping member 326 to transfer the flexible flat cable 200' to an assembly area.

Next, the assembly apparatus 300' may identify an area to be assembled in the battery cell unit 100 in a manner such as vision inspection to obtain location information on each component (and connectors of each component).

Subsequently, after placing the flexible flat cable 200' at a designated location, the assembly apparatus 300' may move (for example, rotate) the transfer member 310' to grip another area (for example, one of both end portions of the cable 200') of the flexible flat cable 200' using a fourth gripping member 328 and may be driven so that the other area is positioned closer to an assembly area (for example, the first busbar frame 610 or the second busbar frame 620) and then engaged with a designated connector. In addition, the assembly apparatus 300' may be driven to move the transfer member 310' again to grip and assemble the other of both end portions of the cable 200' using the fourth gripping member 328 into the remaining connector of the busbar frame 600.

Although not illustrated in FIG. 6, the assembly apparatus 300' according to an aspect may be provided with two individual transfer members and may simultaneously perform assembly for both end portions of a cable at once using each of a third gripping member and a fourth gripping member provided in each transfer member.

It may be understood that the flexible flat cable 200' illustrated in FIGS. 5 and 6 as above is provided in the battery cell unit 100 separately from the flexible flat cable 200 for electrically connecting two components 110 and 120 facing one side, which is described with reference to FIGS. 1 to 4.

For example, when the battery cell unit 100 according to various aspects includes the flexible flat cable 200 for electrically connecting two components 110 and 120 disposed to face an identical direction, the flexible flat cable 200 may be assembled into the battery cell unit 100 using the assembly apparatus 300 and the assembling method in the manner described above with reference to FIGS. 1 to 4.

In addition, when the battery cell unit 100 includes the flexible flat cable 200' for electrically connecting two components 610 and 620 disposed to face opposite directions, the flexible flat cable 200' may be assembled into the battery cell unit 100 using the assembly apparatus 300' and the assembling method in the manner described above with reference to FIGS. 5 and 6.

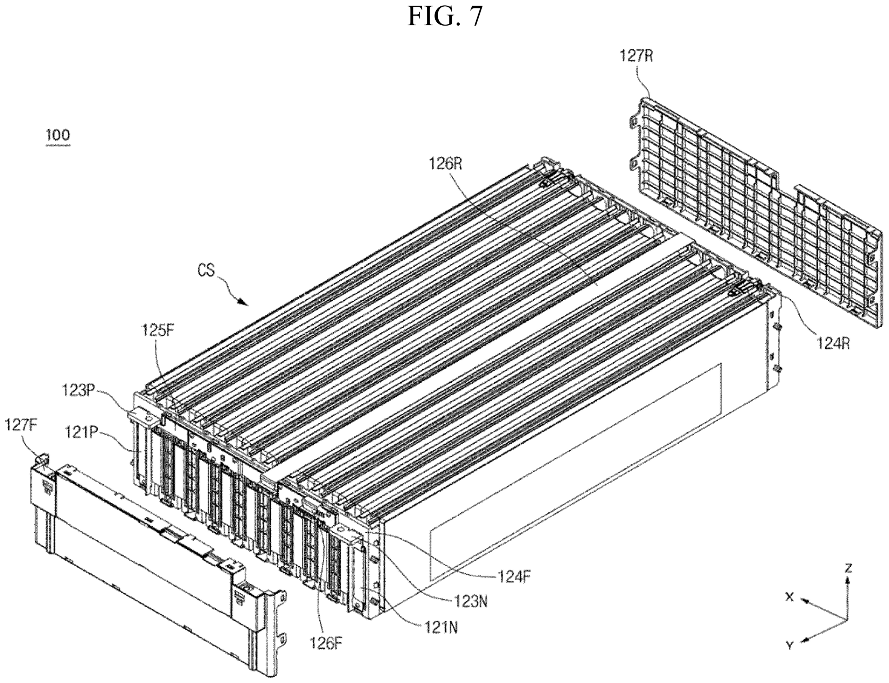

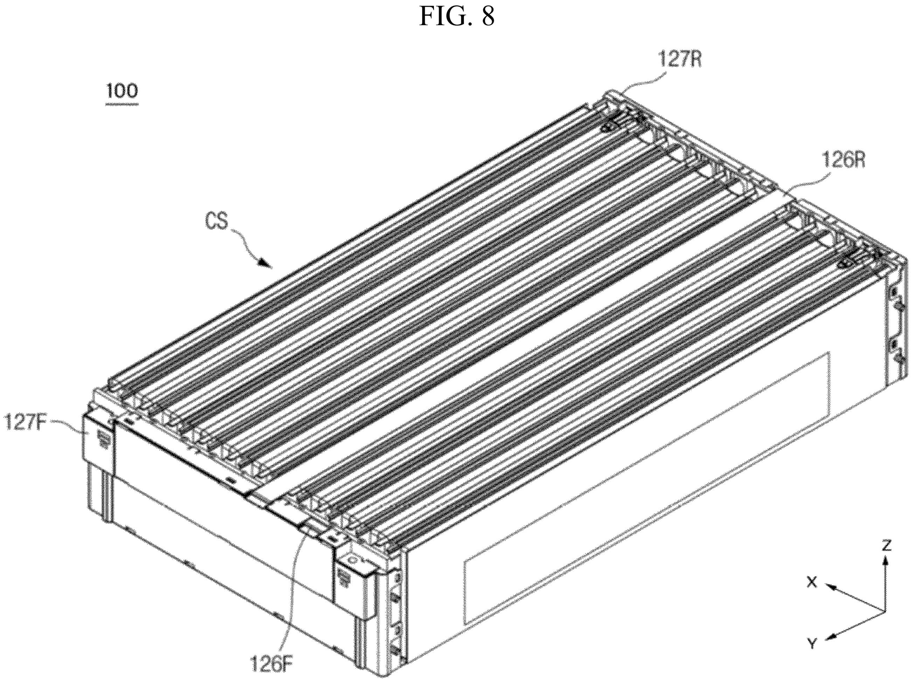

FIGS. 7 to 9 are exploded perspective views of the battery cell unit 100 according to an aspect of the present disclosure. FIG. 8 is a perspective view of the battery cell unit 100 of FIG. 7. FIG. 9 is a partial exploded perspective view of the battery cell unit 100 of FIG. 7.

Hereinafter, the battery cell unit 100 manufactured by the assembly apparatus 300 according to various aspects of the present disclosure is described in detail with reference to FIGS. 7 to 9.

Referring to FIGS. 7 to 9, the battery cell unit 100 according to various aspects may include a battery cell stack CS, a first busbar frame 124F, a second busbar frame 124R, and a lead cover assembly 127F.

The battery cell stack CS may be formed as a plurality of battery cells (for example, a plurality of pouch-type battery cells) are stacked along one direction. Each of the battery cells may include at least one of a positive electrode lead 121P, a negative electrode lead 121N, an electrode assembly, and a pouch case. For example, the pouch case may be an element that accommodates and covers the electrode assembly including a positive electrode, a negative electrode, and a separator interposed between the positive electrode and the negative electrode of each battery cell in an inner space.

The positive electrode lead 121P may be connected to positive electrodes of the electrode assembly, and the negative electrode lead 121N may be connected to negative electrodes of the electrode assembly. The positive electrode lead 121P and the negative electrode lead 121N may at least partially protrude outside from the pouch case. The positive electrode lead 121P and the negative electrode lead 121N may be disposed to be spaced apart in a direction substantially perpendicular to a stacking direction of the battery cells.

Each of the first busbar frame 124F and the second busbar frame 124R may be coupled to the battery cell stack CS. The first busbar frame 124F may be disposed at a first side (for example, on the front surface of the battery cell unit 100) of the battery cell unit 100 facing a first direction, and the second busbar frame 124R may be disposed at a second side (for example, on the rear surface of the battery cell unit 100) of the battery cell unit 100 facing a second direction that is an opposite direction of the first direction in which the first busbar frame 124F is disposed.

Each of the first busbar frame 124F and the second busbar frame 124R may support the positive electrode lead 121P for at least some battery cells of the battery cell stack CS and the negative electrode lead 121N for at least some other battery cells. In addition, the first busbar frame 124F may support first and second busbars 123P and 123N. Meanwhile, the first and second busbars 123P and 123N may be coupled to the positive electrode lead 121P or the negative electrode lead 121N of the battery cells to output a voltage of the battery cell stack CS. Meanwhile, a first integrated circuit 125F may be mounted on the first busbar frame 124F.

The lead cover assembly 127F may include a lead cover frame 127FF coupled to the first busbar frame 124F to at least partially cover the first busbar frame 124F at the first side of the battery cell unit 100. In addition, the lead cover assembly 127F may include a second integrated circuit 127FIC mounted on the lead cover frame 127FF and an integrated circuit cover 127FC coupled to the lead cover frame 127FF to cover the second integrated circuit 127FIC. For example, the integrated circuit cover 127FC and the lead cover frame 127FF may include an insulating material. Meanwhile, the battery cell unit 100 may further include a lead cover 127R coupled to the second busbar frame 124R at the second side of the battery cell unit 100.

The first integrated circuit 125F mounted on the first busbar frame 124F and the second integrated circuit 127FIC mounted on the lead cover frame 127FF may be electrically connected to each other by a first flexible flat cable 126F (for example, the flexible flat cable 200 of FIG. 1). For example, one end of the first flexible flat cable 126F may be connected to the first integrated circuit 125F and another end of the first flexible flat cable 126F may be connected to the second integrated circuit 127FIC.

The lead cover frame 127FF may include a first slit 127S1 at locations corresponding to a first point at which one end of the first flexible flat cable 126F is connected to the first integrated circuit 125F and a second point at which another end of the first flexible flat cable 126F is connected to the second integrated circuit 127FIC. For example, the first flexible flat cable 126F may be connected to the second integrated circuit 127FIC through the first slit 127S1 of the lead cover frame 127FF. In this case, the first point at which the first flexible flat cable 126F is connected to the first integrated circuit 125F and the second point at which the first flexible flat cable 126F is connected to the second integrated circuit 127FIC may have different heights in the Z-axis direction (in other words, a vertical direction) and different distances from a center of the battery cell unit 100 in the Y-axis direction (in other words, the first direction). In addition, the first point and the second point may be located on an identical axis in an X-axis direction. For example, the first point and the second point may correspond to different locations from the center of the battery cell unit 100 in the Y-axis and Z-axis directions, in other words, locations to have a predetermined step in a stepped shape.

Meanwhile, the first integrated circuit 125F may be configured to detect a potential for at least some of the plurality of battery cells forming the battery cell stack CS, and information (for example, voltage values) related to the potential detected by the first integrated circuit 125F may be transferred to the second integrated circuit 127FIC through the first connection cable 126F.

In aspects, the second integrated circuit 127FIC may include a cell management controller (CMC) and may be configured to monitor the plurality of battery cells and perform cell balancing. As above, by mounting the CMC as the second integrated circuit 127FIC on the lead cover frame 127FF, damage to the CMC may be prevented during other processes such as electrode lead welding, and the predetermined step arranged for the points at which each of the first integrated circuit 125F and the second integrated circuit 127FIC is connected to the first flexible flat cable 126F may enable easily and rapidly assembling the cable 126F using the assembly apparatus 300 according to various aspects of the present disclosure.

The battery cell unit 100 according to various aspects may include a third integrated circuit 125R mounted on the second busbar frame 124R disposed at another side of the battery cell unit 100 facing the second direction (in other words, the -Y-axis direction). In addition, the battery cell unit 100 may further include a second flexible flat cable 126R (for example, the flexible flat cable 200' of FIG. 5) for electrically connecting the third integrated circuit 125R and the second integrated circuit 125R. Through this, information (for example, voltage values) about a potential of predetermined battery cells detected by the third integrated circuit 125R may be transferred to the second integrated circuit 125R through the second flexible flat cable 126R.

Meanwhile, the lead cover frame 127FF may further include a second slit 127S2 at a point where one end of the second flexible flat cable 126R is connected to the second integrated circuit 127FIC. In other words, the second flexible flat cable 126R may be connected to the second integrated circuit 127FIC through the second slit 127S2 of the lead cover frame 127FF.

Meanwhile, while terms indicating directions such as up and down are used in this specification, it is apparent to those of ordinary skill in the art with regard to the present disclosure that these terms are used merely for convenience of description and may vary depending on a position of a corresponding object, a location of a viewer, or the like.

While various aspects of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned aspects may be implemented with some elements removed, and each aspect may be implemented in combination with each other.

## Claims

1. An assembly apparatus of a flexible flat cable for manufacturing a battery cell unit, the assembly apparatus comprising:
a transfer member; and
a plurality of gripping members protruding from the transfer member,
wherein the plurality of gripping members include a first gripping member configured to grip one end of the flexible flat cable and a second gripping member configured to grip another end of the flexible flat cable.

2. The assembly apparatus of claim 1, wherein the flexible flat cable is configured to electrically connect two different components disposed at one side of the battery cell unit facing a first direction.

3. The assembly apparatus of claim 1, wherein a relative position of the first gripping member and the second gripping member is configured to be adjusted based on location information of two components to be connected to the flexible flat cable.

4. The assembly apparatus of claim 3, wherein the transfer member is configured to move closer to the two components simultaneously, while the relative position of the first gripping member and the second gripping member is maintained, to assemble the one end and the other end of the flexible flat cable into the two components individually.

5. The assembly apparatus of claim 1, wherein each of the first gripping member and the second gripping member includes a gripper including a pair of finger parts that are operable to move closer or farther with respect to the one end or the other end of the flexible flat cable.

6. The assembly apparatus of claim 5, wherein each of the first gripping member and the second gripping member protrude within an inner space formed at an end portion of the transfer member.

7. The assembly apparatus of claim 5, wherein the pair of finger parts is formed in an L-shape.

8. The assembly apparatus of claim 5, wherein the gripper includes a pneumatic gripper or a vacuum suction gripper.

9. The assembly apparatus of claim 1, wherein the transfer member includes a robot arm.

10. The assembly apparatus of claim 1, wherein the battery cell unit includes:
a battery cell stack in which one or more battery cells are stacked;
a first busbar frame coupled to the battery cell stack and disposed at a first side of the battery cell unit facing a first direction;
a second busbar frame coupled to the battery cell stack and disposed at a second side of the battery cell unit facing a second direction that is an opposite direction of the first direction; and
a lead cover frame coupled to the first busbar frame to at least partially cover the first busbar frame at the first side of the battery cell unit,
wherein the transfer member and the plurality of gripping members operate so that the one end of the flexible flat cable is connected to a first integrated circuit mounted on the first busbar frame and the other end of the flexible flat cable is connected to a second integrated circuit mounted on the lead cover frame.

11. The assembly apparatus of claim 10, wherein the second integrated circuit includes a cell management controller (CMC).

12. The assembly apparatus of claim 10, wherein a first point at which the first integrated circuit is connected to the one end of the flexible flat cable and a second point at which the second integrated circuit is connected to the other end of the flexible flat cable have different distances from a central portion of the battery cell unit in the first direction and different heights in a vertical direction.

13. The assembly apparatus of claim 12, wherein the lead cover frame includes a slit at locations corresponding to the first point and the second point.

14. The assembly apparatus of claim 10, wherein, based on the flexible flat cable connected by the assembly apparatus, information related to a potential detected by the first integrated circuit is configured to be transferred to the second integrated circuit through the flexible flat cable.
